# EUROPEAN PATENT APPLICATION

(11) **EP 2 099 029 A1**
(43) Date of publication of application: **09.09.2009**
(21) Application number: 09003124.6
(22) Date of filing: 04.03.2009
(51) Int. Cl.: G11B 7/09

(54) **Plate spring and lens driving apparatus**

(30) Priority: 05.03.2008 JP 2008054989
(71) Applicant: Mitsumi Electric Co., Ltd., Tama-shi, Tokyo 206-8567 (JP)
(72) Inventor: Miura, Nobuyuki, Tama-Shi Tokyo 206-8567 (JP)
(74) Representative: Grünecker, Kinkeldey, Stockmair & Schwanhäusser Anwaltssozietät

(57) **Abstract**

A plate spring is provided. An inner peripheral end is formed into an annular shape. An outer peripheral end is spaced apart from the inner peripheral end and surrounds the inner peripheral end. N arm portions are formed along a circumferential direction of the annular shape so as to connect the inner peripheral end to the outer peripheral end, where N is an integer not less than two. N inner peripheral connection portions are protruded outwardly from the inner peripheral end in a radial direction of the annular shape so as to connect the inner peripheral end to the N arm portions. N outer peripheral connection portions are protruded inwardly from the outer peripheral end in the radial direction so as to connect the outer peripheral end to the N arm portions. The plate width of one end of one of the arm portions in a longitudinal direction of the one of the arm portions is larger than the plate width of a center portion of the one of the arm portions in the longitudinal direction.

## Description

### BACKGROUND

The present invention relates to a lens driving apparatus, and more particularly, to a structure of a pair of plate springs which is provided on both sides of a cylindrical portion of a lens holder holding a lens assembly (barrel) in an optical axis direction and supports the lens holder so as to be displaceable in an optical axis direction in the state where the lens holder is positioned in a radial direction.

A small-sized portable camera is mounted to a cellular phone equipped with a camera. In the small-sized portable camera, an auto-focus lens driving apparatus is used. In the past, various auto-focus lens driving apparatuses have been proposed.

For example, Patent Document 1 (Figs. 1-3) discloses a lens driving apparatus in which an upper plate spring (front spring) and a lower plate spring (rear spring) are vertically (longitudinally) attached to a lens support body (lens holder) in an optical axis direction, and the lens support body (lens holder) is moved in an optical axis direction of a lens assembly (barrel) by means of an electromagnetic force obtained by a current supplied to a driving coil.

The upper plate spring (front spring) and the lower plate spring (rear spring) have the substantially same shape as each other. Accordingly, hereinafter, all the upper plate spring (front spring) and the lower plate spring (rear spring) are simply referred to as a plate spring (spring).

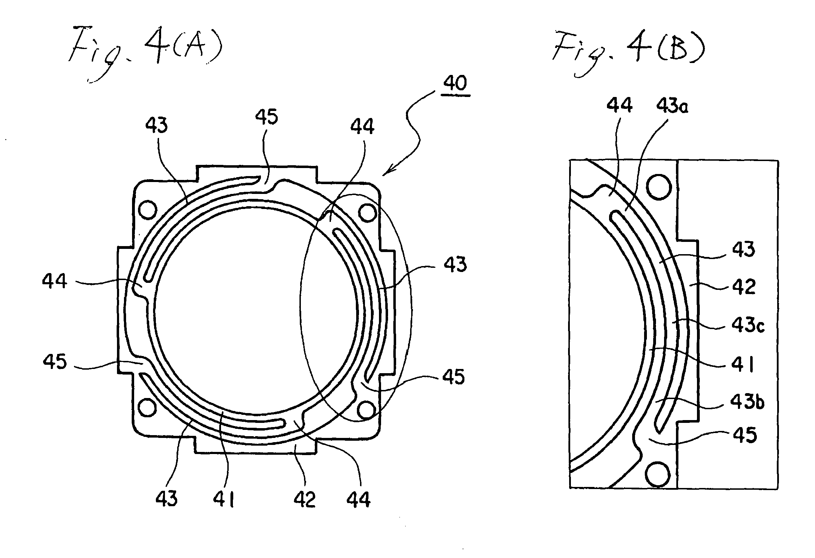

Fig. 4(A) is a top view showing a related-art plate spring (spring) 40 and Fig. 4(B) is a partially enlarged view magnifying a part surrounded by the oval shown in Fig. 4(A).

The related-art plate spring (spring) 40 includes an inner peripheral end (inner ring) 41 and an outer peripheral end (outer ring) 42 which are formed into an annular shape and three arm portions (arm parts) 43 which are formed in a circumferential direction so as to connect the inner and outer peripheral ends to each other. Each arm portion (arm part) 43 extends in a circumferential direction. An inner peripheral connection portion 44, which is formed between the inner peripheral end 41 and the arm portion (arm part) 43, protrudes outward in a radial direction from the inner peripheral end 41. An outer peripheral connection portion 45, which is formed between the outer peripheral end 42 and the arm portion (arm part) 43, protrudes inward in a radial direction from the outer peripheral end 42. The arm portions (arm part) 43 have a substantially identical width in a circumferential direction.

Further, Patent Document 2 (Fig.1) discloses a lens driving apparatus which is excellent in resistance to shake and impact by reducing stresses acting on front and rear springs in various directions.

In the lens driving apparatus disclosed in Patent Document 2, each of the front and rear springs respectively attached to front and rear portions of a lens support body (lens holder) in an optical axis direction is configured as a plate spring formed into an annular shape in a top view. The plate spring includes an inner peripheral end which is formed into an annular shape, an outer peripheral end which is formed into an annular shape having a larger radius than that of the inner peripheral end, and three arm portions which are provided between the inner peripheral end and the outer peripheral end. Each arm portion includes plural peripheral portions which are formed in a circumferential direction so as to have diameters having different radiuses, an inner peripheral connection portion which is connected to the inner peripheral end, and an outer peripheral connection portion which is connected to the outer peripheral end. The ends of the peripheral portions are connected to each other by means of a joining portion formed in a curve shape. Additionally, each connection portion is formed in a curve shape.

Patent Document 3 (Fig.1) discloses a plate spring (spring) capable of exhibiting a linear deformation characteristic without a characteristic variation by a drop. The plate spring disclosed in Patent Document 3 includes an inner peripheral ring portion (inner peripheral end), an outer peripheral ring portion (outer peripheral end) which is spaced apart from the inner peripheral ring portion, and at least one circular-arc arm portion (arm part) which extends up to the inner peripheral ring portion and the outer peripheral ring portion. The inner peripheral ring portion and the outer peripheral ring portion elastically expand and contract in a normal direction of a plate surface by means of the circular-arc arm portion. At least one of the inner peripheral ring portion and the outer peripheral ring portion is provided with an arm inner peripheral support portion which supports the circular-arc arm portion and is elastically deformed by an external force occurring in a direction perpendicular to the normal direction of the plate surface so as to deform the circular-arc arm portion in the direction where the external force occurs.

Patent Document 4 (Figs.2 and 3) discloses a lens driving apparatus capable of suppressing an optical axis misalignment by softening bending moment acting on a plate spring used to elastically support a lens holder holding a lens so as to prevent a plastic deformation of the plate spring.

The plate spring disclosed in Patent Document 4 includes an outer peripheral fixed ring portion which is fixed to a fixed member, an inner peripheral fixed ring portion which is fixed to the holder, an outer protrusion piece which protrudes inward in a radial direction from the outer peripheral fixed ring portion, an inner protrusion piece which protrudes outward in a radial direction from the inner peripheral fixed ring portion, and a connection piece (arm portion) which connects the outer protrusion piece to the inner protrusion piece. The connection piece (arm portion) extends in a circumferential direction, and has a substantially identical width. At least a part of the connection piece is subjected to a bending process in a thickness direction.
Patent Document 1: Japanese Patent Publication No. 2005-128392A
Patent Document 2: Japanese Patent Publication No. 2006-201525A
Patent Document 3: Japanese Patent Publication No. 2005-258355A
Patent Document 4: Japanese Patent Publication No. 2007-072272A

As disclosed in Patent Document 1, in the related-art plate spring (spring) 40 shown in Fig. 4(A), plate widths of an inner peripheral base portion 43a and an outer peripheral base portion 43b of the arm portion (arm part) 43 are the substantially same as a plate width of a center portion 43c of the arm portion (arm part) 43 in a longitudinal direction. For this reason, when a load, which is caused by an external impact (for example, a drop) and is larger than a load during a normal operation, is applied to the plate spring 40, a bending stress is concentrated at the root portions (base portions) 43a and 43b of the arm portion (arm part) 43 of the plate spring 40. As a result, a plastic deformation occurs in the plate spring 40 or a bending stress remains in the inside of the plate spring 40, thereby causing a problem that an operation characteristic of the lens driving apparatus changes easily.

In the front and rear springs disclosed in Patent Document 2, a problem arises in that the structure is complex, the manufacture is difficult, and then the cost increases.

In the plate spring disclosed in Patent Document 3, since the plate width of the arm portion is substantially identical in a circumferential direction like Patent Document 1, the same problem as that of the related-art spring (plate spring) 40 shown in Fig. 4(A) arises.

In the plate spring disclosed in Patent Document 4, since the connection piece (arm portion) needs to be subjected to the bending process in a thickness direction, a problem arises in that the manufacture is difficult and the cost increases.

### SUMMARY

It is therefore an object of the present invention to provide a lens driving apparatus and a plate spring having an improved impact resistance at a low cost.

The other objects of the invention will be apparent according to the following description.

In order to achieve the object, according to an aspect of at least one embodiment of the present invention, there is provided a plate spring comprising: an inner peripheral end formed into an annular shape; an outer peripheral end spaced apart from the inner peripheral end and surrounding the inner peripheral end; N arm portions formed along a circumferential direction of the annular shape so as to connect the inner peripheral end to the outer peripheral end, where N is an integer not less than two; N inner peripheral connection portions protruded outwardly from the inner peripheral end in a radial direction of the annular shape so as to connect the inner peripheral end to the N arm portions; and N outer peripheral connection portions protruded inwardly from the outer peripheral end in the radial direction so as to connect the outer peripheral end to the N arm portions, wherein the plate width of one end of one of the arm portions in a longitudinal direction of the one of the arm portions is larger than the plate width of a center portion of the one of the arm portions in the longitudinal direction.

The N may be equal to three. Each plate width of both ends of the one of the arm portions in the longitudinal direction may be larger than the plate width of the center portion of the one of the arm portions in the longitudinal direction. The one end of the one of the arm portions may be connected to one of the inner peripheral connection portions. The one end of the one of the arm portions may be connected to one of the outer peripheral connection portions.

According to another aspect of at least one embodiment of the present invention, there is provided a lens driving apparatus comprising: a lens holder having a cylindrical portion adapted to hold a lens assembly; a driving coil fixed to the lens holder so as to be positioned in a circumference of the cylindrical portion; a yoke having a permanent magnet opposed to the driving coil; and a pair of plate springs provided on both sides of the cylindrical portion of the lens holder in an optical axis direction of the cylindrical portion and movably supporting the lens holder in the optical axis direction in a state where the lens holder is positioned in a radial direction of the cylindrical portion, wherein each of the plate springs is configured as the above plate spring, and wherein the inner peripheral end of each of the plate springs is attached to the lens holder and the outer peripheral end of each of the plate springs attached to the yoke.

According to the invention, it is possible to reduce a bending stress concentrated at the one end of the one of the arm portions and thus to improve impact resistance of the plate spring and the lens driving apparatus. Further, since the structure is not complex, it is possible to provide the lens driving apparatus and the plate spring at a low cost.

### BRIEF DESCRIPTION OF THE DRAWINGS

The above and other aspects of the present invention will become more apparent by describing in detail exemplary embodiments thereof with reference to the accompanying drawings, wherein:
Fig. 1 is an external perspective view showing a lens driving apparatus according to an embodiment of the invention;
Fig. 2 is an exploded perspective view showing the lens driving apparatus shown in Fig. 1;
Fig. 3(A) is a top view showing a plate spring used in the lens driving apparatus shown in Fig. 2;
Fig. 3(B) is a partially enlarged view showing the plate spring;
Fig. 4(A) is a top view showing a related-art plate spring; and
Fig. 4(B) is a partially enlarged view showing the related-art plate spring.

### DETAILED DESCRIPTION OF EXEMPLARY EMBODIMENTS

Hereinafter, an exemplary embodiment of the invention will be described with reference to the accompanying drawings.

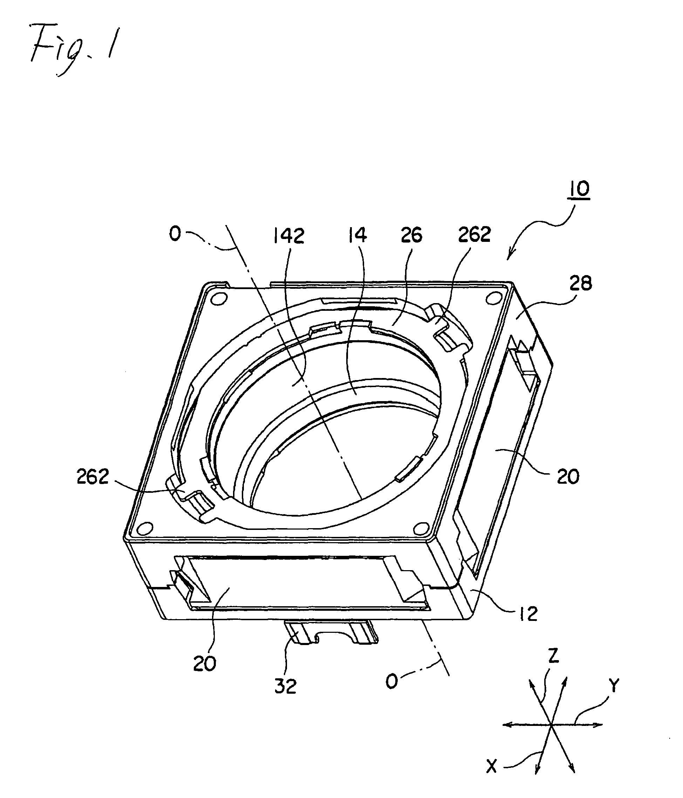

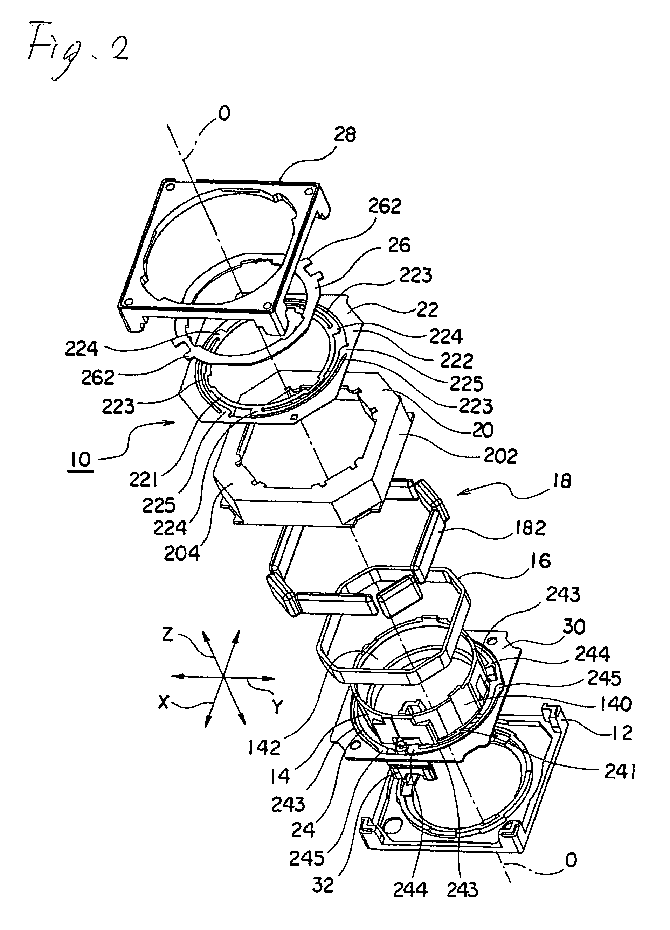

A lens driving apparatus 10 according to the embodiment of the invention will be described with reference to Figs. 1 and 2. Fig. 1 is an external perspective view showing the lens driving apparatus 10. Fig. 2 is an exploded perspective view showing the lens driving apparatus 10. Here, as shown in Figs. 1 and 2, an orthogonal coordinate system (X, Y, and Z) is used. In the orthogonal coordinate system (X, Y, and Z) shown in Figs. 1 and 2, the X axis indicates a longitudinal direction (depth direction), the Y axis indicates a traverse direction (width direction), and the Z axis indicates a vertical direction (height direction). Then, in the examples shown in Figs. 1 to 3(B), the vertical direction Z corresponds to a direction of an optical axis O of the lens.

However, at an actual use time, the longitudinal direction corresponds to the direction of the optical axis O, that is, the vertical direction Z. In other words, an upward direction of the Z axis corresponds to a forward direction, and a downward direction of the Z axis corresponds to a backward direction.

The lens driving apparatus 10 shown in the drawings is provided in a cellular phone equipped with an auto-focus camera. The lens driving apparatus 10 is used to move a lens assembly (barrel) (not shown) in the direction of the optical axis O. The lens driving apparatus 10 includes an actuator base 12 disposed in the lower side of (in rear of) the Z-axis direction (the direction of the optical axis O). A lower portion (rear portion) of the actuator base 12 is provided with an imaging element (not shown) disposed on a substrate. The imaging element picks up a subject image formed by the lens assembly and converts the pick-up image into an electrical signal. The imaging element is formed by, for example, a CCD (charge coupled device) type image sensor, a CMOS (complementary metal oxide semiconductor) type image sensor, or the like. Accordingly, a camera module is formed by the combination of the lens driving apparatus 10, the substrate, and the imaging element.

The lens driving apparatus 10 includes a lens holder 14 which includes a cylindrical portion 140 for holding the lens assembly (barrel), a driving coil 16 which is fixed to the lens holder 14 so as to be positioned in a circumference of the cylindrical portion 140, a yoke 20 which includes a permanent magnet 18 opposed to the driving coil 16, and a pair of plate springs 22 and 24 provided on both sides of the cylindrical portion 140 of the lens holder 14 in the direction of the optical axis O. The pair of plate springs 22 and 24 supports the lens holder 14 so as to be displaceable in the direction of the optical axis O in the state where the lens holder 14 is positioned in a radial direction. Among the pair of plate springs 22 and 24, one plate spring 22 is called as an upper plate spring, and the other plate spring 24 is called as a lower plate spring.

Additionally, as described above, at an actual use time, the upward direction of the Z axis (the direction of the optical axis O) corresponds to the forward direction and the downward direction of the Z axis (the direction of the optical axis O) corresponds to the backward direction. Accordingly, the upper plate spring 22 is called as a front spring, and the lower plate spring 24 is called as a rear spring. Each of the upper plate spring 22 and the lower plate spring 24 has a thickness of 30-60 micrometers.

As shown in Fig. 2, the yoke 20 is formed in an octagonal cylindrical shape. That is, the yoke 20 includes an octagonal cylindrical outer casing portion 202 and an octagonal ring-shaped end 204 provided on the upper end (front end) of the outer casing portion 202. Accordingly, the driving coil 16 is formed in an octagonal cylindrical shape in accordance with the shape of the octagonal cylindrical yoke 20. The permanent magnet 18 is formed by eight rectangular permanent magnet pieces 182 disposed on each side member of the octagonal cylindrical outer casing portion 202 of the yoke 20.

As shown in Fig. 2, the permanent magnet 18 is disposed on the inner peripheral surface of the outer casing portion 202 of the yoke 20 so as to have a gap with respect to the driving coil 16.

The upper plate spring (front spring) 22 is disposed on the upper side (front side) of the lens holder 14 in the direction of the optical axis O, and the lower plate spring (rear spring) 24 is disposed on the lower side (rear side) of the lens holder 14 in the direction of the optical axis O. The upper plate spring (front spring) 22 and the lower plate spring (rear spring) 24 have the substantially same configuration as each other.

The upper plate spring (front spring) 22 includes an inner peripheral end 221 attached to the lens holder 14, an outer peripheral end 222 attached to the yoke 20, and three arm portions (arm parts) 223 formed in a circumferential direction so as to connect the inner peripheral end 221 and the outer peripheral end 222. The inner peripheral end 221 is formed into an annular shape. The outer peripheral end 222 is formed to be spaced apart from the inner peripheral end 221 and to have a larger radius than that of the inner peripheral end 221. Each arm portion (arm part) 223 extends in a circumferential direction. An inner peripheral connection portion 224 connecting the inner peripheral end 221 to each arm portion (arm part) 223 protrudes outward in a radial direction from the inner peripheral end 221. An outer peripheral connection portion 225 connecting the outer peripheral end 222 to each arm portion (arm part) 223 protrudes inward in a radial direction from the outer peripheral end 222. Additionally, a plate width of the arm portion (arm part) 223 will be described later in detail with reference to the accompanying drawings.

In the same manner, the lower plate spring (rear spring) 24 includes an inner peripheral end 241 attached to the lens holder 14, an outer peripheral end (not shown) attached to the yoke 20, and three arm portions (arm parts) 243 formed in a circumferential direction so as to connect the inner peripheral end 241 to the outer peripheral end. The inner peripheral end 241 is formed into an annular shape. The outer peripheral end is formed to be spaced apart from the inner peripheral end 241 and to have a larger radius than that of the inner peripheral end 241. Each arm portion (arm part) 243 extends in a circumferential direction. An inner peripheral connection portion 244 connecting the inner peripheral end 241 to each arm portion (arm part) 243 protrudes outward in a radial direction from the inner peripheral end 241. An outer peripheral connection portion 245 connecting the outer peripheral end to each arm portion (arm part) 243 protrudes inward in a radial direction from the outer peripheral end.

Additionally, the inner peripheral end is called as an inner ring and the outer peripheral end is called as an outer ring.

The inner peripheral end 221 of the upper plate spring (front spring) 22 is sandwiched between the lens holder 14 and a stopper 26 so as to be fixed therebetween. In other words, the stopper 26 is fitted to the lens holder 14 so that the inner peripheral end 221 of the upper plate spring (front spring) 22 is sandwiched between the lens holder 14 and the stopper 26. On the other hand, the outer peripheral end 222 of the upper plate spring (front spring) 22 is sandwiched between the yoke 20 and a cover 28 so as to be fixed therebetween.

The stopper 26 has functions described below. That is, the stopper 26 has a function of allowing the inner peripheral end 221 of the upper plate spring (front spring) 22 to be highly precisely adhered to the lens holder 14 without a deviation. Accordingly, it is possible to improve a deviation of a VCM (voice coil motor) characteristic. Also, the stopper 26 has a function of improving an adhering strength of the upper plate spring (front spring) 22. Accordingly, it is possible to improve an impact resistance of the lens driving apparatus 10. Also, the stopper 26 has a function of preventing a deformation of the upper plate spring (front spring) 22 when a drop impact occurs in the lens driving apparatus 10. Accordingly, it is possible to also improve the impact resistance of the lens driving apparatus 10. Also, the stopper 26 has a function of determining a mechanical stroke of the lens driving apparatus 10.

Additionally, as described below, in this embodiment, the stopper 26 has a function of preventing a rotation of the lens holder 14.

On the other hand, the outer peripheral end of the lower plate spring (rear spring) 24 is fixed to the yoke 20 via a spacer 30. In other words, the spacer 30 and the outer peripheral end of the lower plate spring (rear spring) 24 are sandwiched between the yoke 20 and the actuator base 12 so as to be fixed therebetween. The inner peripheral end 241 of the lower plate spring (rear spring) 24 is fixed to a position on the side of the lower end (rear end) of the lens holder 14.

An inner peripheral wall of the cylindrical portion 140 of the lens holder 14 is provided with a female screw 142. On the other hand, although it is not shown in the drawing, an outer peripheral wall of the lens assembly (barrel) is provided with a male screw threaded into the female screw 142. Accordingly, it is possible to mount the lens assembly (barrel) to the lens holder 14 in such a manner that the lens assembly (barrel) is threaded into the cylindrical portion 140 of the lens holder 14 in the direction of the optical axis O while being rotated about the optical axis O, the lens assembly (barrel) is accommodated in the lens holder 14, and then the lens assembly and the lens holder 14 are adhered to each other by means of an adhesive or the like.

At this time, the lens holder 14 may be rotated together, but in this invention, as described below, the lens holder 14 is completely prevented from being rotated.

When a current is supplied to the driving coil 16 so as to cause an interaction between a magnetic field of the permanent magnet 18 and a magnetic field formed by the current flowing through the driving coil 16, an electromagnetic force is generated. Therefore, it is possible to adjust a position of the lens holder 14 (lens assembly) in the direction of the optical axis O.

A sheet-shaped electrode 32 is disposed between the lower plate spring (rear spring) 24 and the actuator base 12. The sheet-shaped electrode 32 is used to supply a power to the driving coil 16.

As shown in the above-described embodiment, the stopper 26 includes two U-shaped rotation preventing-restraining portions 262 which are provided at symmetric positions corresponding to a rotation of two times by 180° with respect to the optical axis O. The U-shaped rotation preventing-restraining portions 262 are used as rotation preventing members for completely preventing the lens holder 14 from being rotated upon mounting the lens assembly to the cylindrical portion 140 of the lens holder 14. That is, upon mounting the lens assembly to the cylindrical portion 140 of the lens holder 14, it is possible to completely prevent the lens holder 14 from being rotated in such a manner that a jig (not shown) is inserted to the two U-shaped rotation preventing-restraining portions 262 to be held therein. At this time, a clearance between the stopper 26 and the cover 28 is ensured (maintained).

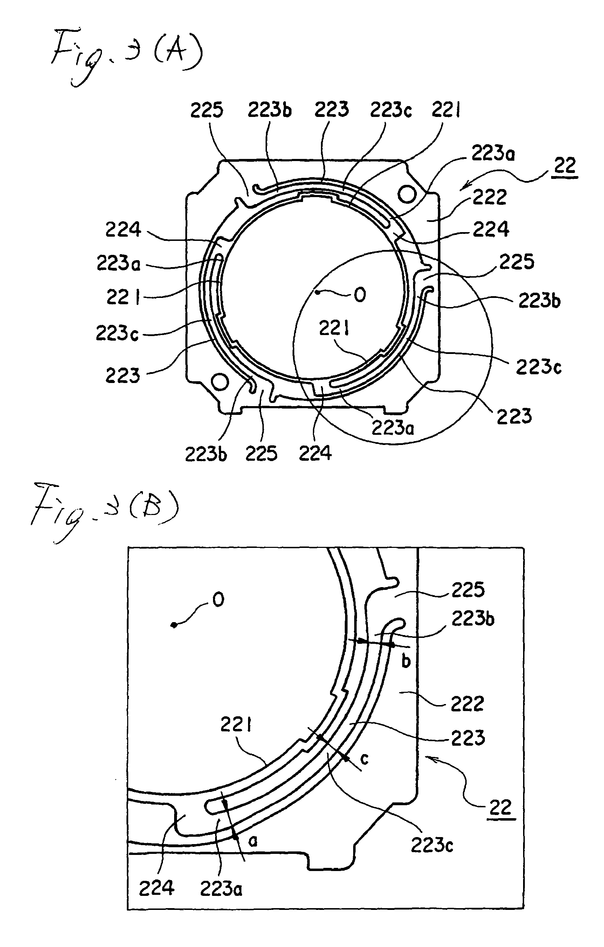

Next, the plate width of the arm portion (arm part) 243 forming the upper plate spring (front spring) 22 will be described in detail with reference to Figs. 3(A) and 3(B). Fig. 3(A) is a top view showing the upper plate spring (front spring) 22 and Fig. 3(B) is a partially enlarged view magnifying a part surrounded by the circle shown in Fig. 3(A). Additionally, since the plate width of the arm portion (arm part) 243 forming the lower plate spring (rear spring) 24 is the same as that of the arm portion (arm part) 243, the description thereof will be omitted.

As shown in Fig. 3(B), a plate width of an inner peripheral base portion 223a of the arm portion (arm part) 223 is denoted by "a", a plate width of an outer peripheral base portion 223b of the arm portion (arm part) 223 is denoted by "b", and then a plate width of a center portion 223c of the arm portion (arm part) 223 in a longitudinal direction is denoted by "c". As apparently shown in Fig. 3(B), the plate width "a" of the inner peripheral base portion 223a and the plate width "b" of the outer peripheral base portion 223b are configured to be larger than the plate width "c" of the center portion 223c in a longitudinal direction. That is, a relationship is set such that a > c and b > c.

Accordingly, since a spring characteristic of the root portions (base portions) 223a and 223b of the arm portion (arm part) 223 is reliably exhibited, it is possible to distribute a bending stress concentrated at the root portions (base portions) 223a and 223b of the arm portion (arm part) 223. In other words, it is possible to reduce the bending stress concentrated at the root portions (base portions) 223a and 223b of the arm portion (arm part) 223. Accordingly, it is possible to improve an impact resistance of the upper plate spring 22, the lower plate spring 24, and the lens driving apparatus 10. Further, since the structures of the upper plate spring 22 and the lower plate spring 24 are not complex, it is possible to provide the plate spring and the lens driving apparatus 10 at a low cost.

As described above, the exemplary embodiment of the invention is described, but may be, of course, modified into various forms by the person skilled in the art without departing from the spirit of the invention. For example, in the above-described embodiment, both the plate width "a" of the inner peripheral base portion 223a and the plate width "b" of the outer peripheral base portion 223b of the arm portion 223 are configured to be larger than the plate width "c" of the center portion 223c of the arm portion 223 in a longitudinal direction (a > c and b > c). However, at least one of the plate width "a" of the inner peripheral base portion 223a and the plate width "b" of the outer peripheral base portion 223b of the arm portion 223 may be configured to be larger than the plate width "c" of the center portion 223c of the arm portion 223 in a longitudinal direction. For example, the plate width "a" of the inner peripheral base portion 223a of the arm portion 223 may be configured to be larger than the plate width "c" of the center portion 223c of the arm portion 223 in a longitudinal direction (a > c). Alternatively, the plate width "b" of the outer peripheral base portion 223b of the arm portion 223 may be configured to be larger than the plate width "c" of the center portion 223c of the arm portion 223 in a longitudinal direction (b > c). Further, in the above-described embodiment, three arm portions 223 are used to connect the inner peripheral end 221 to the outer peripheral end 222, in general, the invention may be applied to the plate spring in which N number (N is an integer not less than two) of arm portions are used to connect the inner peripheral end 221 to the outer peripheral end 222.

## Claims

1. A plate spring comprising:
an inner peripheral end formed into an annular shape;
an outer peripheral end spaced apart from the inner peripheral end and surrounding the inner peripheral end;
N arm portions formed along a circumferential direction of the annular shape so as to connect the inner peripheral end to the outer peripheral end, where N is an integer not less than two;
N inner peripheral connection portions protruded outwardly from the inner peripheral end in a radial direction of the annular shape so as to connect the inner peripheral end to the N arm portions; and
N outer peripheral connection portions protruded inwardly from the outer peripheral end in the radial direction so as to connect the outer peripheral end to the N arm portions,
wherein the plate width of one end of one of the arm portions in a longitudinal direction of the one of the arm portions is larger than the plate width of a center portion of the one of the arm portions in the longitudinal direction.

2. The plate spring as set forth in claim 1, wherein the N is equal to three.

3. The plate spring as set forth in claim 1 or 2, wherein each plate width of both ends of the one of the arm portions in the longitudinal direction is larger than the plate width of the center portion of the one of the arm portions in the longitudinal direction.

4. The plate spring as set forth in claim 1 or 2, wherein the one end of the one of the arm portions is connected to one of the inner peripheral connection portions.

5. The plate spring as set forth in claim 1 or 2, wherein the one end of the one of the arm portions is connected to one of the outer peripheral connection portions.

6. A lens driving apparatus comprising:
a lens holder having a cylindrical portion adapted to hold a lens assembly;
a driving coil fixed to the lens holder so as to be positioned in a circumference of the cylindrical portion;
a yoke having a permanent magnet opposed to the driving coil; and
a pair of plate springs provided on both sides of the cylindrical portion of the lens holder in an optical axis direction of the cylindrical portion and movably supporting the lens holder in the optical axis direction in a state where the lens holder is positioned in a radial direction of the cylindrical portion,
wherein each of the plate springs is configured as the plate spring as set forth in any one of claims 1 to 5, and
wherein the inner peripheral end of each of the plate springs is attached to the lens holder and the outer peripheral end of each of the plate springs attached to the yoke.
